(19) Europäisches Patentamt
European Patent Office
Office européen des brevets

(11) **EP 1 315 347 B1**

(12) **FASCICULE DE BREVET EUROPEEN**

(45) Date de publication et mention
de la délivrance du brevet:
**04.11.2009 Bulletin 2009/45**

(51) Int Cl.:
*H04L 25/02* *(2006.01)* *H04L 25/03* *(2006.01)*

(21) Numéro de dépôt: **02292906.1**

(22) Date de dépôt: **22.11.2002**

(54) **Procédé et dispositif d'égalisation utilisant des signaux probes**

Verfahren und Vorrichtung zur Entzerrung mit Probesignalen

Procedure and device for equalisation using probe signals

(84) Etats contractants désignés:
**AT BE BG CH CY CZ DE DK EE ES FI FR GB GR
IE IT LI LU MC NL PT SE SK TR**

(30) Priorité: **23.11.2001 FR 0115188**

(43) Date de publication de la demande:
**28.05.2003 Bulletin 2003/22**

(73) Titulaire: **Thales
92200 Neuilly Sur Seine (FR)**

(72) Inventeur: **Laurent, Pierre André
Thales Int. Property
94117 Arcueil cedex (FR)**

(74) Mandataire: **Dudouit, Isabelle
Marks & Clerk France
Conseils en Propriété Industrielle
Immeuble " Visium "
22, avenue Aristide Briand
94117 Arcueil Cedex (FR)**

(56) Documents cités:
**EP-A- 0 793 359     EP-A- 0 912 019
US-A- 5 127 051**

• **LO N W K ET AL: "ADAPTIVE EQUALIZATION
AND DIVERSITY COMBINING FOR A MOBILE
RADIO CHANNEL" COMMUNICATIONS:
CONNECTING THE FUTURE. SAN DIEGO, DEC. 2
- 5, 1990, PROCEEDINGS OF THE GLOBAL
TELECOMMUNICATIONS CONFERENCE AND
EXHIBITION(GLOBECOM), NEW YORK, IEEE, US,
vol. 2, 2 décembre 1990 (1990-12-02), pages
923-927, XP000220911 ISBN: 0-87942-632-2**

Printed by Jouve, 75001 PARIS (FR)

**Description**

La présente invention concerne un procédé et un égaliseur adaptés notamment pour des modems de type série.

Elle s'applique par exemple pour égaliser, démoduler dans certains modems de type série utilisés dans la gamme HF, des blocs de données de taille importante encadrés par de petites séquences de référence.

Certains documents de normalisation internationale de procédés de transmission appelés STANAG (Standardization NATO Agreement en anglo-saxon) décrivent des formes d'ondes à utiliser pour des modems (modulateurs/démodulateurs), qui sont destinées à être transmises sur des canaux étroits (3kHz en général) et de type série. Les symboles sont transmis séquentiellement à une vitesse de modulation généralement constante de 2400 bauds.

Le canal de transmission utilisé (gamme des Hautes Fréquences HF de 3 à 30 MHz) étant particulièrement perturbé et sa fonction de transfert évoluant relativement rapidement, toutes ces formes d'onde comportent à intervalle réguliers des signaux connus qui servent de références et à partir desquels la fonction de transfert du canal est déduite. Parmi les différents formats standardisés retenus, certains concernent des modems à haut débit, typiquement de 3200 à 9600 bits/s qui sont sensibles aux erreurs d'estimation du canal.

Pour obtenir un haut débit, il est indispensable en plus, d'utiliser une modulation complexe de type QAM (Quadrature Amplitude Modulation ) à nombreux états, de limiter au maximum la proportion de signaux de référence, afin de maximiser le débit utile. En d'autres termes, la communication comportera des blocs de données de taille relativement grande, entre lesquels seront insérés des signaux de référence de petite taille.

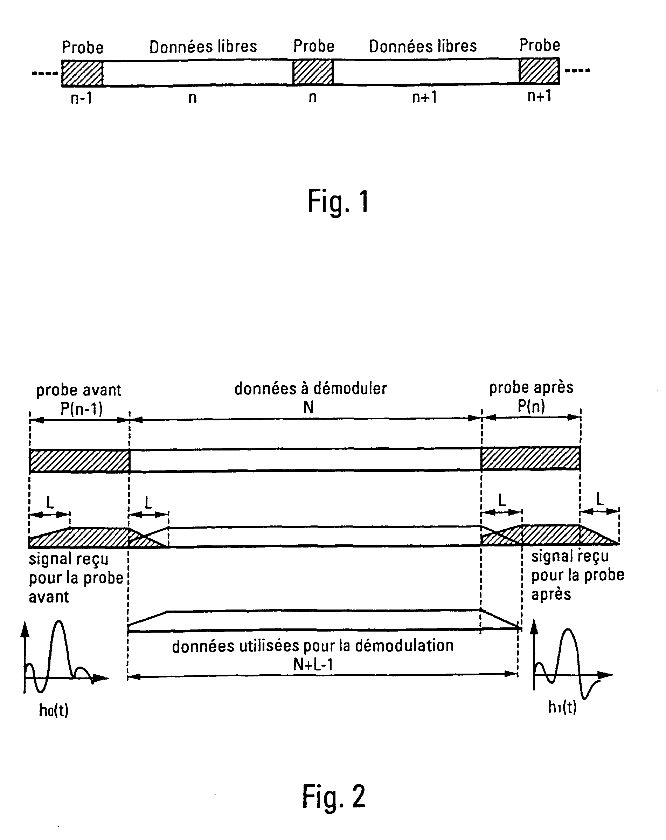

La figure 1 représente un exemple de structure d'un signal décrit dans le STANAG 4539 où l'on trouve en alternance, des blocs de 256 symboles de données avec insertion de blocs de 31 symboles connus (appelés « probe » ou référence), ce qui correspond à environ 11 % du total.

Pour évaluer la réponse impulsionnelle h(t) du canal au niveau du $n^{\text{ième}}$ bloc de données, on dispose d'une première probe (n-1) située avant le bloc de données et d'une deuxième probe (n) disposée après le bloc de données qui permettent d'évaluer la fonction de transfert du canal au travers de la réponse impulsionnelle combinée obtenue par la convolution de :

- la réponse impulsionnelle de l'émetteur, fixe,
- la réponse impulsionnelle du canal, éminemment variable,
- la réponse impulsionnelle du récepteur, fixe,

ces trois éléments entrant en jeu pour définir le signal reçu à chaque instant.

Pour simplifier, dans la suite de la description on supposera que cet ensemble forme la réponse impulsionnelle du canal.

Le DFE (Decision Feedback Equalizer en anglo-saxon) est couramment utilisé dans des modems correspondant par exemple à des STANAG (tels que le 4285) où la proportion des signaux de référence est relativement élevée et les blocs de données relativement courts (par exemple 32 symboles dans le 4285).

Une autre manière de procéder selon l'art antérieur consiste à utiliser un algorithme dit « BDFE » (Block Decision Feedback Equalizer). Ceci revient à estimer la réponse impulsionnelle du canal avant et après un bloc de données et à trouver les valeurs de symboles émis (données émises) les plus vraisemblables qui minimiseront l'erreur quadratique moyenne entre le signal reçu et le signal estimé à partir d'une réponse impulsionnelle locale supposée connue.

Cet algorithme schématisé en liaison avec la figure 2 consiste notamment à exécuter les étapes suivantes :

a) estimer la réponse impulsionnelle du canal de longueur L symboles, connaissant cette réponse impulsionnelle estimée,

b) éliminer au début du bloc de données n comportant N symboles utiles, l'influence des symboles de la probe (n-1) placée devant (L-1 premiers symboles),

c) supprimer de la probe (n) placée après le bloc des données, la participation des symboles de la probe qui sont perturbés par l'influence des derniers symboles de données (L-1 symboles),

d) à partir des échantillons ainsi obtenus, dont le nombre est un peu plus grand que le nombre de symboles de données (à savoir N+L-1), estimer au mieux la valeur des N symboles utiles les plus probablement émis.

L'étape b) peut considérer que la réponse impulsionnelle du canal vaut $h_0(t)$ dans la probe avant le bloc de données.

De même l'étape c) considère que la réponse impulsionnelle du canal vaut $h_1(t)$ dans la probe après le bloc de données.

Il est aussi possible de supposer que la réponse impulsionnelle du canal évolue linéairement entre $h_0(t)$ et $h_1(t)$ tout au long du bloc de données.

Toutefois, à moins d'utiliser un procédé de correction d'erreurs sophistiqué et donc, nécessitant une puissance élevée de calcul, les performances obtenues à l'aide de cet algorithme sont à peine satisfaisantes pour des canaux de transmission très perturbés, qui varient très rapidement.

Inversement, il s'avère que la dégradation des performances par rapport au cas idéal où la réponse impulsionnelle du canal est parfaitement connue, devient importante lorsque le canal de transmission est plutôt stable ou varie lentement. Ceci vient du fait que l'on est obligé d'estimer une réponse impulsionnelle du canal de longueur trop élevée par rapport à ce qu'elle est dans les configurations peu sévères, ce qui dégrade la qualité de la surestimation qui s'effectuer à partir de probes de longueur réduite.

En particulier, pour un canal avec un seul trajet, une valeur de L très faible (quelques symboles à 2400 bauds) suffit largement et conduit à des performances proches de ce qu'elles seraient avec une estimation idéale du canal.

De même, pour un canal variant lentement, ayant ce que l'on appelle un « faible étalement Doppler », il devrait être possible d'avoir une meilleure estimation puisque, entre blocs voisins, la réponse du canal est fortement corrélée (varie peu) et l'on pourrait envisager dans ce cas une forme de lissage qui améliorerait les performances.

En général, les BDFE utilisés dans l'art antérieur présentent certaines faiblesses notamment :

- la réponse impulsionnelle est supposée évoluer linéairement tout au long d'un bloc de données, ce qui est d'autant moins vrai que l'étalement Doppler d'au moins un trajet n'est pas négligeable. Ceci est particulièrement pertinent pour les blocs de données libres espacés d'une durée proche de l'inverse de la fréquence d'échantillonnage, dite de Nyquist, qu'il faudrait pour pouvoir en théorie connaître parfaitement le canal,
- aux faibles valeurs du rapport signal/bruit, la mauvaise estimation de la réponse impulsionnelle du canal dégrade encore un peu plus les performances.

L'invention concerne un procédé qui permet notamment de s'adapter à la vitesse d'évolution du canal et d'offrir ainsi à tout instant un niveau de performances « optimal » tout en n'augmentant que de façon négligeable la puissance de calcul requise.

Le procédé et le dispositif selon l'invention vise notamment à obtenir une estimation plus fine et plus fréquente de la réponse impulsionnelle du canal en tenant compte de sa vitesse de variation et du niveau.

Le brevet EP 0793359 divulgue un égaliseur amélioré à boucle de retour.

Le brevet EP 0912019 concerne un procédé pour estimer un canal de communication qui utilise des séquences de probe intercalées entre des données.

La description fera appel à certaines notations adoptées dont les suivantes :

➢ $e_n$ : échantillons complexes émis, espacés d'un symbole et appartenant à l'une des constellations mentionnées plus haut (connus ou inconnus),

➢ $r_n$ : échantillons complexes reçus, les valeurs de n seront explicitées à chaque fois, ces échantillons pouvant appartenir à une probe ou à des données,

➢ L : longueur de la réponse impulsionnelle, en symboles, du canal à estimer,

➢ P : le nombre de symboles d'une « probe » (nom anglais des séquences de référence),

➢ N : le nombre de symboles d'un bloc de données,

➢ $d_0...d_{P-1}$ : valeurs complexes connues des symboles de référence, quelle que soit la probe concernée.

L'invention concerne un procédé d'égalisation de données d'un signal reçu par un récepteur après transmission dans un canal, le signal reçu comportant une ou plusieurs trames, une trame comportant au moins une probe et un bloc de données, **caractérisé en ce qu**'il comporte au moins les étapes suivantes :

■ estimer la réponse impulsionnelle à plusieurs instants, par exemple, régulièrement espacés précédant un bloc de données ($h_{k0} ... h_0$) et à plusieurs instants régulièrement espacés suivant le bloc de données ($h_1 ... h_{k1}$), ces instants où sont disposés des signaux connus appelés probes, sont au nombre de M,

■ ré-estimer par interpolation/filtrage, la réponse impulsionnelle du canal juste avant et juste après le dit bloc pour remplacer les estimations initiales ($h_0$ et $h_1$),

■ estimer par interpolation/filtrage K réponses impulsionnelles intermédiaires régulièrement réparties dans le bloc de données,

■ modifier l'algorithme BDFE afin qu'il tienne compte de l'estimation "par segments" de la réponse impulsionnelle ainsi obtenue,

■ utiliser pour le lissage des filtres / interpolateurs adaptés à la vitesse de variation du canal (son "étalement Doppler"), à un rapport signal sur bruit S/B fixé, ainsi qu'à la position (début, milieu, fin) dans la super-trame en cours de réception,

■ effectuer à intervalles réguliers le choix entre les jeux d'interpolateurs disponibles en se basant sur un critère de qualité qui est le rapport signal/bruit estimé en sortie de l'algorithme BDFE.

La probe fictive est par exemple disposée sensiblement au milieu d'un bloc de données.

On dispose par exemple plusieurs probes fictives équiréparties dans le bloc de données ou réparties de façon à simplifier les calculs

On peut utiliser pour le calcul des probes fictives un total de M probes disponibles au voisinage du bloc de données considéré avec M pair de préférence.

On estime, par exemple, les réponses impulsionnelles associées aux probes fictives en utilisant la méthode des moindres carrés.

On peut déterminer les probes fictives à positionner dans le bloc de données en utilisant des interpolateurs et à partir d'une ou de plusieurs probes disponibles avant et/ou après le bloc de données.

Les coefficients des interpolateurs sont par exemple choisis en minimisant l'erreur quadratique moyenne d'interpolation pour une rotation maximale donnée de la réponse impulsionnelle entre probes et pour une valeur de rapport S/B.

On peut déterminer les coefficients des interpolateurs pour plusieurs valeurs de rotation de phase A.

L'invention concerne aussi un dispositif pour égaliser au moins un signal ayant traversé un canal de transmission, le signal reçu comportant une ou plusieurs trames, une trame comportant au moins un bloc de données encadré par deux probes et **caractérisé en ce qu**'il comporte au moins :

des moyens adaptés à exécuter les étapes du procédé selon la revendication 1 :

■ estimer la réponse impulsionnelle à plusieurs instants, par exemple, régulièrement espacés précédant un bloc de données ($h_{k0}$ ... $h_0$) et à plusieurs instants régulièrement espacés suivant le bloc de données ($h_1$ ... $h_{k1}$), ces instants où sont disposés des signaux connus appelés probes, sont au nombre de M,

■ ré-estimer par interpolation/filtrage, la réponse impulsionnelle du canal juste avant et juste après le dit bloc pour remplacer les estimations initiales ($h_0$ et $h_1$),

■ estimer par interpolation/filtrage K réponses impulsionnelles intermédiaires fictives régulièrement réparties dans le bloc de données,

■ modifier l'algorithme BDFE afin qu'il tienne compte de l'estimation "par segments" de la réponse impulsionnelle ainsi obtenue,

■ utiliser pour le lissage des filtres / interpolateurs adaptés à la vitesse de variation du canal (son "étalement Doppler"), à un rapport signal sur bruit S/B fixé, ainsi qu'à la position (début, milieu, fin) dans la super-trame en cours de réception,

■ effectuer à intervalles réguliers le choix entre les jeux d'interpolateurs disponibles en se basant sur un critère de qualité qui est le rapport signal/bruit estimé en sortie de l'algorithme BDFE.

L'objet de la présente invention offre notamment les avantages suivants :

■ il permet d'atteindre des performances requises notamment dans le cas de canaux de transmission très perturbés, à variations rapides, tout en n'augmentant que de façon négligeable la puissance de calcul requise; et

■ une meilleure estimation de la réponse impulsionnelle dans le temps du canal qui conduit à augmenter les performances habituellement obtenues aux faibles rapports signal/bruit.

La présente invention sera mieux comprise à la lecture de la description qui suit d'un exemple de réalisation donné à titre illustratif et nullement limitatif en référence aux figures qui représentent :

- la figure 1 un exemple général de la structure des données à transmettre,
- la figure 2 un schéma de l'algorithme BDFE utilisé selon l'art antérieur,
- la figure 3 un exemple de mise en oeuvre du procédé BDFE par segments selon l'invention,
- la figure 4 un exemple d'un bloc de données modifié selon l'invention,
- la figure 5 un synoptique des étapes pour estimer la réponse impulsionnelle du canal,
- la figure 6 plusieurs interpolateurs fonction de différentes valeurs de rotation de phase,
- la figure 7 un exemple de schéma fonctionnel d'un dispositif selon l'invention.

L'exemple donné ci-après à titre illustratif et nullement limitatif concerne un signal structuré en super-trames comportant plusieurs trames, chaque trame étant constituée par exemple d'une probe ou séquence de référence et d'un bloc de données. Les trames se succèdent, formant ainsi un ensemble de probes précédant un bloc de données, du bloc de données n et de probes suivant le bloc de données. La « trame courante » désigne dans la suite de la description la trame comprenant le bloc de données à démoduler.

En résumé, le procédé repose sur l'idée suivante : l'interpolation des réponses impulsionnelles du canal consiste à calculer K probes ou réponses impulsionnelles fictives par exemple régulièrement espacées dans la trame courante à démoduler.

De manière plus générale et plus complète le procédé selon l'invention met en oeuvre les étapes suivantes :

■ estimer la réponse impulsionnelle à plusieurs instants, par exemple, régulièrement espacés précédant un bloc de données ($h_{k0}$ ... $h_0$) et à plusieurs instants régulièrement espacés suivant le bloc de données ($h_1$ ... $h_{k1}$), ces instants où sont disposés des signaux connus appelés probes, sont au nombre de M cela revient à considérer des probes fictives transmises à intervalles réguliers à la place des données inconnues,

■ ré-estimer par interpolation/filtrage, la réponse impulsionnelle du canal juste avant et juste après le dit bloc pour remplacer les estimations initiales ($h_0$ et $h_1$),

■ estimer par interpolation/filtrage K réponses impulsionnelles intermédiaires régulièrement réparties dans le bloc de données,

■ modifier l'algorithme BDFE pour qu'il tienne compte de l'estimation "par segments" de la réponse impulsionnelle ainsi obtenue,

■ utiliser pour le lissage des filtres / interpolateurs adaptés au mieux à la vitesse de variation du canal (son "étalement Doppler"), au rapport S/B auquel on désire fonctionner, ainsi qu'à la position (début, milieu, fin) dans la super-trame en cours de réception,

■ effectuer à intervalles réguliers le choix entre les jeux d'interpolateurs disponibles en se basant sur un critère de qualité qui est le rapport signal/bruit estimé en sortie de l'algorithme BDFE.

Le système s'adapte ainsi à chaque instant aux caractéristiques du canal de transmission, ce qui conduit à un niveau de performances optimal, pour une faible augmentation de puissance de calcul.

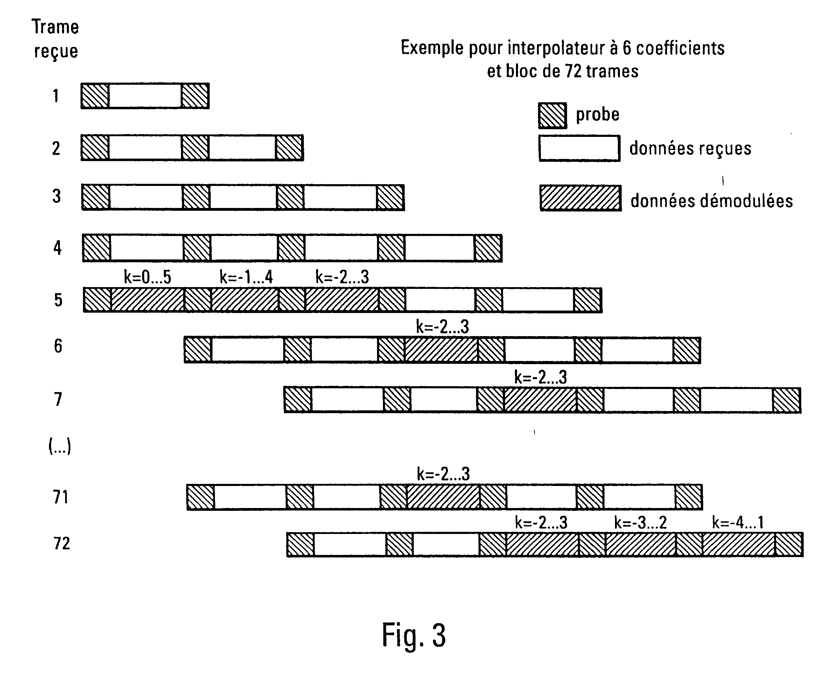

La figure 3 décrit succinctement les interpolations à faire et les probes utilisées, pour le modem décrit par le STANAG 4539 où les trames sont regroupées par blocs (super-trames) de 72 trames.

En pratique, et c'est là l'une des originalités du procédé, on utilisera pour ce traitement non pas 2 (comme l'art antérieur) mais M probes successives, de préférence avec M pair, avec la convention suivante :

- la probe correspondant à l'indice k = 0 est la probe juste avant la trame courante,
- celle correspondant à l'indice k = 1 est la probe juste après la trame courante,
- celle correspondant à l'indice $k_0$ = 2 - M...0 ($k_0$ toujours négatif ou nul) est la probe la plus ancienne (ou la première disponible),
- celle correspondant à l'indice $k_1$ = 1...$k_0$ + M - 1 ($k_1$ est toujours positif, supérieur ou égal à 1) est la probe la plus récente (ou la dernière disponible),

Dans la partie centrale d'un bloc de trames, les probes utilisées pour l'interpolation sont les probes $k_0$ = -M/2, ..., 0, 1, ... $k_1$ = M/2 - 1. Par exemple, pour M = 6, les probes utilisées portent les numéros -2 à +3.

Lors de la réception des trames 1 à 4, aucune démodulation n'est effectuée.

Après réception de "(la probe après)" la trame 5, on démodule les trames 1 à 3 en utilisant les 6 probes disponibles (d'avant la trame 1 jusqu'après la trame 5) avec $k_0$ = 0...-2 et $k_1$ = $k_0$ + 5.

Après réception de "(la probe après)" les trames t = 6...71, on démodule les trames t = 4... 69 en utilisant les 6 probes qui les encadrent (3 avant, 3 après), avec $k_0$ = -2 et $k_1$ = 3.

Enfin, après réception de "(la probe après)" la trame 72, on démodule les trame 70 à 72 en utilisant les 6 dernières probes reçues avec $k_0$ = -2...-4 et $k_1$ = $k_0$ + 5.

Après réception de "(la probe après)" la trame t = 6...71, on démodule la trame t = 4... 69 en utilisant les 6 probes qui l'encadrent (3 avant, 3 après).

Enfin, après réception de "(la probe après)" la trame 72, on démodule les trames 70 à 72 en utilisant les 6 dernières probes reçues.

On voit qu'au début de la super-trame ainsi qu'à sa fin, les trames disponibles avant et après la trame en cours ne sont pas en même nombre, ce qui se traduit par des jeux non constants de valeurs ($k_0$, $k_1$). On doit donc disposer au total, pour des interpolateurs comportant M prises, de M - 1 jeux de coefficients, dont un symétrique (celui utilisé le plus souvent) et les autres dissymétriques, mais pouvant éventuellement se correspondre deux à deux.

Ceci peut être généralisé à un nombre quelconque M de probes utilisées pour le filtrage, ce nombre étant de préférence pair, à la fois pour des raisons de simplicité (symétrie des coefficients des filtres) et parce qu'ainsi la contrainte qui veut qu'un canal stable soit parfaitement interpolé a relativement peu d'influence sur le gain en rapport signal/bruit (l'erreur d'interpolation présente un minimum "naturel" pour une rotation de phase nulle).

**Mécanisme d'interpolation des réponses impulsionnelles**

L'interpolation proprement dite consiste à calculer K probes ou réponses impulsionnelles fictives régulièrement espacées dans la trame courante à démoduler. A l'issue de cette étape d'interpolation, le procédé dispose de K réponses impulsionnelles intermédiaires fictives qui vont être utilisées pour estimer la réponse impulsionnelle du canal de propagation avant de mettre en oeuvre un algorithme BDFE.

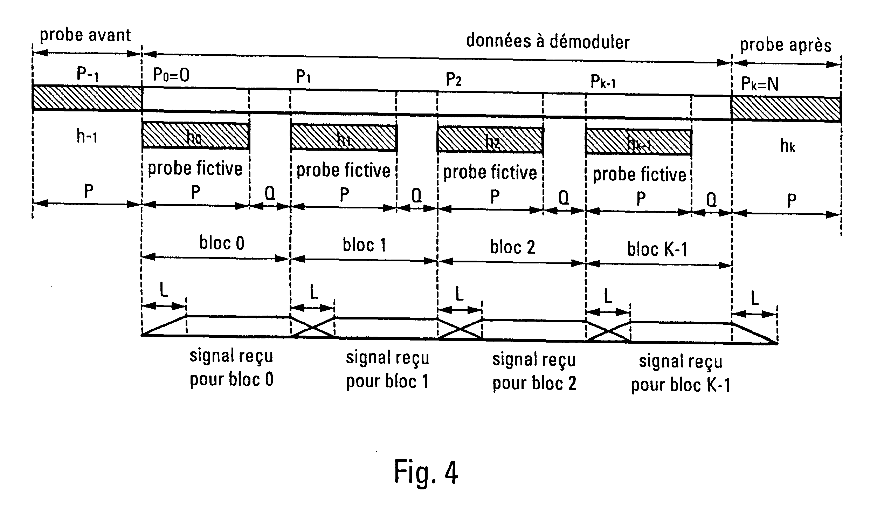

La figure 4 schématise un exemple de répartition de probes fictives à l'intérieur d'un bloc de données à démoduler. Cet exemple a consisté à découper le bloc de données en K sous-blocs, par exemple 4 sous-blocs, de longueur égale ou sensiblement égale. Le nombre choisi de sous-blocs K doit préférentiellement diviser le nombre N de symboles dans le bloc de données pour des raisons de simplicité. Il est aussi possible de ne pas respecter cette contrainte. Chaque sous-bloc d'indice i est associé à une réponse impulsionnelle hi définie à son début par une probe fictive Pi de longueur P. La référence Q désigne la longueur correspondant aux données d'un sous-bloc entre la probe fictive Pi de ce bloc et la probe fictive après Pi+1.

Sur ce schéma est aussi représenté le signal reçu pour un bloc donné d'indice i, prenant en compte la longueur L de la réponse du canal de transmission.

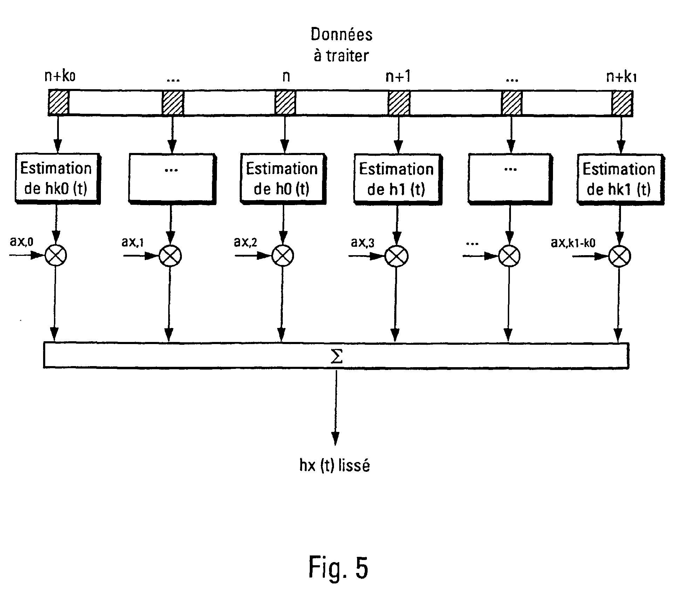

L'interpolation des probes fictives est réalisée selon un schéma donné à la figure 5, par exemple. La référence x définit la position de la probe concernée, en prenant comme convention que x=0 correspond à la probe réelle avant le bloc de données considéré, c'est-à-dire le bloc de données à démoduler et x=1 à la probe réelle après ce bloc de données.

Dans cet exemple, les valeurs des positions x pour les probes fictives intermédiaires associées au bloc de données sont par exemple, k étant le rang de la probe dans les données :

$$k = 0 : x = P / (P + N)$$

$$k = 1 : x = (P + (P + Q)) / (P + N) \text{ ou } (P + N/K) / (P + N)$$

$$k = 2 : x = (P + 2(P + Q)) / (P + N) \text{ ou } (P + 2 N/K) / (P + N)$$

..

$$k = K - 1 : x = (P + (K - 1)(P + Q)) / (P + N) \text{ ou } (P + (K - 1) N/K) / (P + N)$$

avec P, N et Q définis précédemment.

Dans l'algorithme proposé, le calcul sera aussi effectué pour les probes vraies, à savoir k = -1, x = 0 pour la probe avant, et k = K, x = 1 pour la probe après, pour profiter de la réduction de bruit obtenue par l'interpolation, qui est aussi optimisée pour assurer une fonction de filtrage (voir plus loin).

**Première étape du procédé : estimation de la réponse impulsionnelle associée à une probe fictive d'indice i**

La première étape consiste à estimer les réponses impulsionnelles "vraies", en nombre égal à M, associées aux probes de rangs $n + k_0...n + k_1$. Ces réponses impulsionnelles sont notées $h_k(t)$ ou $h_{k,\,0...L-1}$, avec $k = k_0...k_1$ sachant que $M = k_1 - k_0 + 1$;

L'estimation de ces réponses impulsionnelles se fait par exemple selon la méthode des moindres carrés connue de l'Homme du métier et rappelée à titre d'exemple non limitatif.

On cherche la meilleure estimation des L échantillons de la réponse impulsionnelle h du canal notés $h_{0...L-1}$, cette méthode étant la même pour toutes les réponses impulsionnelles l'indice k de $h_{k,\,0...L-1}$ est omis.

Le signal émis connu est $d_0...d_{P-1}$, pour une probe donnée, et le signal à traiter est noté $r_0...r_{P-1}$, pour cette même probe.

L'estimation de la réponse impulsionnelle h est effectuée en minimisant l'erreur quadratique totale donnée par :

$$E = \sum_{n=N_0}^{N_1} \left| \sum_{m=0}^{L-1} d_{n-m} h_m - r_n \right|^2 \quad (1)$$

Pour que seuls les symboles connus interviennent (i.e. $d_0$ à $d_{P-1}$ seulement), on prend $N_0 = L - 1$ et $N_1 = P - 1$, ce qui a en particulier pour conséquence de calculer, lors de l'opération précédente de filtrage, uniquement les P - L (au lieu de L) valeurs corrigées r'.

La minimisation de E conduit aux L équations suivantes :

$$\sum_{n=L-1}^{P-1} d_{n-p}^* \left( \sum_{m=0}^{L-1} d_{n-m} h_m - r_n \right) = 0$$
$$p = 0 ... L - 1 \quad (2)$$

que l'on peut réécrire :

$$\sum_{m=0}^{L-1} h_m \left( \sum_{n=L-1}^{P-1} d_{n-m} d_{n-p}^* \right) = \sum_{n=L-1}^{P-1} r_n d_{n-p}^*$$
$$p = 0 ... L - 1 \quad (3)$$

ou encore :

$$\sum_{m=0}^{L-1} A_{p,m} h_m = B_p$$
$$p = 0 ... L - 1 \quad (4)$$

avec

$$A_{p,m} = \sum_{n=L-1}^{P-1} d_{n-m} d_{n-p}^* = A_{m,p}^*$$
$$m = 0 ... L - 1$$
$$p = 0 ... L - 1$$

$$B_p = \sum_{n=L-1}^{P-1} r_n d_{n-p}^*$$
$$p = 0 ... L - 1$$

La matrice $A = \{A_{p,m}\}$ étant hermitienne, la solution du problème est obtenue en utilisant la décomposition L-U de Cholesky, bien connue de l'homme du métier, où $A = L U$ et :

■ L est une matrice triangulaire inférieure n'ayant que des 1 sur la diagonale,
■ U est une matrice triangulaire supérieure où les éléments de la diagonale sont réels.

En pratique, les matrices L et U sont précalculées par exemple en mémoire morte puisque la matrice A est formée à partir de valeurs constantes.

Formellement, il est possible d'écrire que A h = B ou L U h = B, que l'on résout en faisant intervenir un vecteur intermédiaire y, en résolvant d'abord L y = B puis U h = y.

Une fois les M réponses impulsionnelles trouvées, on en calcule la combinaison linéaire à une position x donnée, soit $h_x(t)$ ou $h_{x, 0...L-1}$ par l'équation simple :

$$h_{x, i} = \sum_{k = k_0}^{k = k_1} a_{x, k - k_0}\, h_{k, i} = \sum_{m = 0}^{m = k_1 - k_0} a_{x, m}\, h_{m + k_0, i}$$
$$i = 0...L - 1 \qquad (5)$$

ceci correspond au i-ème échantillon de la réponse impulsionnelle pour une position x.

Les M coefficients réels $a_{x, 0...M-1}$ sont les coefficients d'un interpolateur qui dépend de x, $k_0$ et $k_1$ et qui est optimisé pour des conditions données de transmission.

Un exemple de mode de calcul d'optimisation est exposé ci-dessous.

**Optimisation des coefficients M pour les interpolateurs**

Les interpolateurs ont notamment pour objet d'estimer à partir des probes vraies, situées aux positions $k_0...k_1$ (par rapport à la trame courante), les K probes ou les K réponses impulsionnelles intermédiaires fictives à utiliser dans la trame courante.

Le critère retenu consiste par exemple à minimiser l'erreur quadratique moyenne d'interpolation pour une rotation maximale donnée de la réponse impulsionnelle entre probes (ce qui correspond à un "étalement Doppler" donné et pour un rapport signal/bruit donné qui dépend des spécifications) afin d'obtenir en même temps une fonction de filtrage réductrice de bruit.

De plus, on requiert que l'interpolation soit parfaite pour une rotation de phase nulle, ce qui permet un niveau de performances maximal sur canal à variations lentes. L'expérience montre que cette contrainte a un effet minime sur le bruit d'interpolation lorsque le nombre M de coefficients des interpolations est pair car l'erreur d'interpolation présente un minimum "naturel" au voisinage de 0 si M est pair.

Chaque interpolateur possède M coefficients réels : $a_{0...M-1}$ Pour déterminer ces coefficients, le procédé cherche à minimiser l'erreur quadratique moyenne :

■ pour une puissance de bruit β donnée (i.e. à un rapport S/B bien défini),
■ à une position x comprise entre 0 et 1, sachant que la position 0 correspond à la probe avant, la position 1 à la probe après, et les valeurs intermédiaires aux probes fictives entre les deux,
■ en utilisant le signal aux positions $k_0, ..., 0, 1, ... k_1 = k_0 + M - 1$,
■ sachant que la rotation de phase entre deux positions vaut au plus A en valeur absolue ($A < \pi$),
■ avec la contrainte que l'interpolation soit parfaite pour une rotation de phase nulle.

La puissance de bruit, à minimiser, vaut :

$$B = \beta \sum_{i = 0}^{M - 1} a_i^2 \qquad (6)$$

L'erreur d'interpolation, pour une rotation θ vaut :

$$E(\theta) = \left| \sum_{i = 0}^{M - 1} a_i\, e^{j\,\theta\,(k_0 + i)} - e^{j\,x\,\theta} \right|^2 \qquad (7)$$

L'erreur quadratique moyenne est alors :

$$EQM = \frac{1}{2A} \int_{-A}^{+A} E(\theta)\, d\theta + B \qquad (8)$$

et sa (demi-)dérivée par rapport à $a_m$ (m = 0...M - 1) :

$$\frac{1}{2} \frac{\delta\, EQM}{\delta\, a_m} = \frac{1}{2A} \int_{-A}^{+A} e^{-j\theta(k_0+m)} \left( \sum_{i=0}^{M-1} a_i\, e^{j\theta(k_0+i)} - e^{j x \theta} \right) d\theta + \beta\, a_m \qquad (9)$$

soit :

$$\frac{1}{2} \frac{\delta\, EQM}{\delta\, a_m} = \frac{1}{2A} \left( \sum_{i=0}^{M-1} a_i \int_{-A}^{+A} e^{j\theta(i-m)}\, d\theta - \int_{-A}^{+A} e^{j\theta(x-k_0-m)}\, d\theta \right) + \beta\, a_m \qquad (10)$$

ou encore :

$$\frac{1}{2} \frac{\delta\, EQM}{\delta\, a_m} = \sum_{i=0}^{M-1} a_i \frac{\sin[(i-m)A]}{(i-m)A} - \frac{\sin[(x-k_0-m)A]}{(x-k_0-m)A} + \beta\, a_m \qquad (11)$$

La contrainte C est donnée par :

$$C = \sum_{i=0}^{M-1} a_i - 1 \qquad (12)$$

La minimisation avec contrainte consistera à minimiser la quantité :

$$EQM + \lambda C \qquad (13)$$

avec l'équation supplémentaire :

$$C = 0 \qquad (14)$$

Le système d'équations final à résoudre est donc de dimension M + 1 avec M + 1 inconnues, à savoir $\lambda$ (non

utilisé) et $a_{0...M-1}$ :

M équations de minimisation :

$$\sum_{i=0}^{M-1} a_i \frac{\sin[(i-m)A]}{(i-m)A} + \beta\, a_m + \lambda = \frac{\sin[(x-k_0-m)A]}{(x-k_0-m)A}$$

$$m = 0...M-1 \qquad\qquad (15)$$

une équation pour la contrainte :

$$\sum_{i=0}^{M-1} a_i = 1 \qquad\qquad (16)$$

Le procédé met en oeuvre par exemple la solution suivante : faire la somme des K premières équations et en déduire $\lambda$ sachant que la somme des a; vaut 1 :

$$\lambda = \frac{1}{M}\left[ \sum_{j=0}^{M-1} \frac{\sin[(x-k_0-j)A]}{(x-k_0-j)A} - \sum_{i=0}^{M-1} a_i \sum_{j=0}^{M-1} \frac{\sin[(i-j)A]}{(i-j)A} - \beta \right] \qquad (17)$$

modifier les M premières équations :

$$\sum_{i=0}^{M-1} a_i \left[ M \frac{\sin[(i-m)A]}{(i-m)A} - \sum_{j=0}^{M-1} \frac{\sin[(i-j)A]}{(i-j)A} \right] + M\,\beta\, a_m$$

$$= \beta + M \frac{\sin[(x-k_0-m)A]}{(x-k_0-m)A} - \sum_{j=0}^{M-1} \frac{\sin[(x-k_0-j)A]}{(x-k_0-j)A}$$

$$m = 0...M-1 \qquad\qquad (18)$$

résoudre le système de M équations modifiées.

Les interpolateurs sont par exemple calculés une fois pour toutes et stockés en mémoire morte.

Selon une variante de mise en oeuvre du procédé, on calcule des jeux d'interpolateurs correspondant à différentes valeurs de rotation A. Ceci permet avantageusement l'adaptation à différents canaux, ces derniers étant plus ou moins stables dans le temps. Un canal stable correspond à une rotation maximale A voisine de 0.

Le rapport signal/bruit d'optimisation sera par exemple fonction de sa valeur théorique pour un taux d'erreurs donné (par exemple $10^{-5}$). Cette valeur est d'autant plus faible que :

- la constellation utilisée est moins peuplée (une modulation QPSK quadrature phase shift keying à 4 états est beaucoup moins fragile qu'une modulation QAM-64 quadrature amplitude modulation à 64 états),
- la variation maximale de phase A est faible (A est représentative de l'étalement Doppler du canal et un étalement Doppler faible nécessite un rapport S/B moins élevé qu'un étalement Doppler élevé.

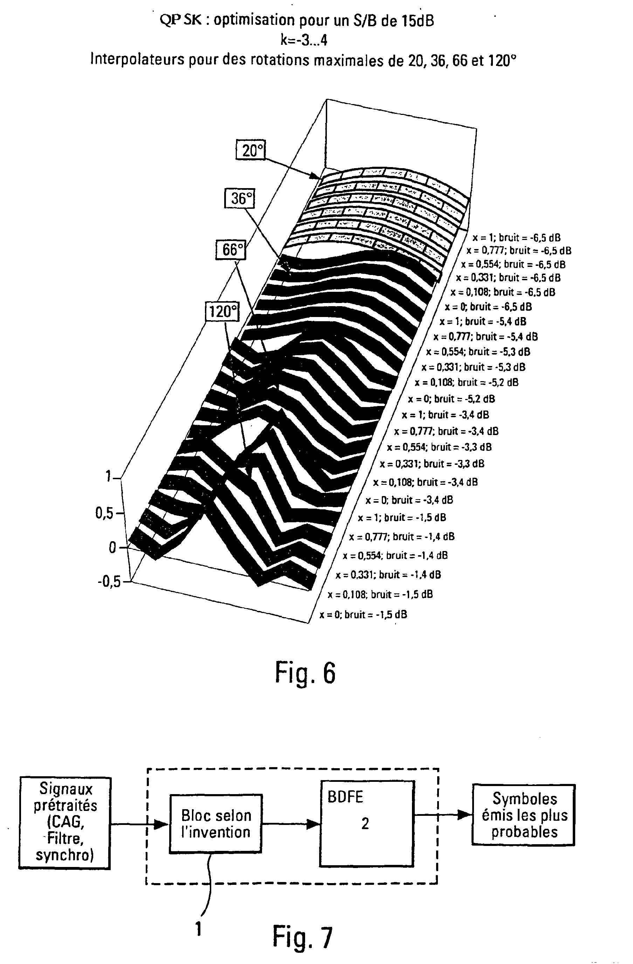

La figure 6 représente les coefficients des interpolateurs pour M = 8 prises, K = 4 probes fictives, et des valeurs de rotation A en progression géométrique : A = $A_0...A_3$ = 20°, 36°, 66° et 120°.

Les valeurs en dB donnent l'effet de réduction de bruit obtenu, à savoir le rapport entre le S/B de l'estimation directe et le S/B de l'estimation interpolée : cette réduction de bruit est d'autant plus faible que la largeur de bande de l'interpolateur (exprimée par la valeur de A) est plus élevée.

En considérant l'ensemble du procédé, les interpolateurs sont avantageusement choisis afin notamment de suivre au mieux l'évolution du canal de transmission.

Le procédé choisit le jeu d'interpolateurs "optimal" par exemple trame par trame ou tout du moins à intervalles suffisamment rapprochés pour pouvoir suivre l'évolution du canal de transmission.

Si à la trame précédente (ou pour les trames précédentes), l'interpolateur correspondant à Ap a été choisi (p = 0...3 dans cet exemple), la démodulation se fera avec les interpolateurs correspondant à $A_{p-1}$ (si possible), Ap, et $A_{p+1}$ (si possible) et c'est celui donnant les meilleurs résultats qui servira de point de départ à la trame suivante (ou aux trames suivantes).

**Algorithme BDFE par segments**

Les réponses impulsionnelles utilisées pour l'exécution de l'algorithme BDFE sont par exemple les suivantes, en nombre égal à K + 2 : $h^{(-1)}_{0...L-1} = h_{0, 0...L-1}$ (associée à la probe avant, correspondant à x = 0) $h^{(0...K-1)}_{0...L-1} = h_{x, 0...L-1}$ (associées aux K probes fictives aux positions x = $x_0...x_{K-1}$) où $x_k$ est donné par :

$$x_k = \frac{P + P_k}{P + N}$$

$$k = 0..K - 1$$

avec

$$P_k = k \frac{N}{K} \text{ ("position de la réponse impulsionnelle")} \tag{19}$$

("position de la réponse impulsionnelle" )

$h^{(K)}_{0...L-1} = h_{1, 0...L-1}$ (associée à la probe après, correspondant à x = 1)

Les probes considérées pour la trame courante correspondent aux symboles ayant les indices suivants :

- P...-1 (vraie probe avant)
$P_0...P_0 + P - 1$ (première probe fictive)
$P_1...P_1 + P - 1$ (deuxième probe fictive) ..... ;
$P_{K-1}...P_{K-1} + P - 1$ (Kème probe fictive)
N...N + P - 1 (vraie probe après)

Par la suite, et pour être conforme au schéma décrivant les probes intermédiaires, on définira N/K comme étant égal à P + Q où P est la longueur d'une probe (vraie ou fictive) et Q est la longueur d'un segment de données entre deux probes fictives.

Une fois calculées les différentes réponses impulsionnelles, on supprime l'influence des probes sur les données en remplaçant les échantillons reçus $r_n$ par des échantillons corrigés $r^c_n$ de la manière suivante:

- probe avant (20):

$$r_{\hat{n}}^c = r_n - \sum_{j=n+1}^{L-1} d_{P+n-j} \left[ h_j^{(-1)} + \frac{n-j-P_{-1}}{P_0 - P_{-1}} \left( h_j^{(0)} - h_j^{(-1)} \right) \right]$$

$$= r_n - \frac{1}{P_0 - P_{-1}} \sum_{j=n+1}^{L-1} d_{P+n-j} \left[ (P_0 - n + j) h_j^{(-1)} + (n - j - P_{-1}) h_j^{(0)} \right]$$

$$n = 0 ... L - 2$$
$$\text{rappel} : P_{-1} = -P$$

- au centre (21):

$$r_{\hat{n}}^c = r_n$$
$$n = L - 1 ... N - 1$$

- probe après (22):

$$r_{\hat{n}}^c = r_n - \varepsilon \sum_{j=0}^{n-N} d_{n-j-N} \left[ h_j^{(K-1)} + \frac{n-j-P_{K-1}}{P_K - P_{K-1}} \left( h_j^{(K)} - h_j^{(K-1)} \right) \right]$$

$$= r_n - \frac{\varepsilon}{P_K - P_{K-1}} \sum_{j=0}^{n-N} d_{n-j-N} \left[ (P_K - n + j) h_j^{(K-1)} + (n - j - P_{K-1}) h_j^{(K)} \right]$$

$$n = N ... N + L - 1$$
$$\text{rappel} : P_K = N$$

Les symboles reçus ne dépendent alors plus que des $b_j$.

Dans le cas idéal, l'influence des probes a été éliminée, les échantillons reçus, notés $r^{id}_n$ sont donnés par :

- début du bloc 0 :

$$r_{\hat{n}}^{id} = \sum_{j=0}^{j=n} b_{n-j} \left[ h_j^{(0)} + \frac{n-j-P_0}{P_1 - P_0} \left( h_j^{(1)} - h_j^{(0)} \right) \right]$$

$$r_{\hat{n}}^{id} = \frac{1}{P+Q} \sum_{j=0}^{j=n} b_{n-j} \left[ (P + Q + j - n) h_j^{(0)} + (n - j) h_j^{(1)} \right]$$

$$r_{\hat{n}}^{id} = \frac{1}{P+Q} \sum_{m=0}^{n} b_m \left[ (P + Q - m) h_{n-m}^{(0)} + m \, h_{n-m}^{(1)} \right]$$

$$n = 0 ... L - 2 \qquad\qquad (23)$$

- reste du bloc 0 :

$$r_n^{id} = \sum_{j=0}^{j=L-1} b_{n-j}\left[h_j^{(0)} + \frac{n-j-P_0}{P_1-P_0}\left(h_j^{(1)} - h_j^{(0)}\right)\right]$$

$$r_n^{id} = \frac{1}{P+Q} \sum_{j=0}^{j=L-1} b_{n-j}\left[(P+Q+j-n)h_j^{(0)} + (n-j)h_j^{(1)}\right]$$

$$r_n^{id} = \frac{1}{P+Q} \sum_{m=n-L+1}^{n} b_m\left[(P+Q-m)h_{n-m}^{(0)} + m\,h_{n-m}^{(1)}\right]$$

$$n = L-1 \dots P+Q-1 \tag{24}$$

- début du bloc k, incluant le traînage du bloc k-1 (k = 1...K-1) :

$$r_n^{id} = \sum_{j=n-k(P+Q)+1}^{L-1} b_{n-j}\left[h_j^{(k-1)} + \frac{n-j-P_{k-1}}{P_k-P_{k-1}}\left(h_j^{(k)} - h_j^{(k-1)}\right)\right]$$
$$+ \sum_{j=0}^{j=n-k(P+Q)} b_{n-j}\left[h_j^{(k)} + \frac{n-j-P_k}{P_{k+1}-P_k}\left(h_j^{(k+1)} - h_j^{(k)}\right)\right]$$

$$r_n^{id} = \frac{1}{P+Q}\left(\begin{array}{l}\displaystyle\sum_{j=n-k(P+Q)+1}^{L-1} b_{n-j}\left[(k(P+Q)+j-n)h_j^{(k-1)} + (n-j-(k-1)(P+Q))h_j^{(k)}\right]\\[2mm]\displaystyle + \sum_{j=0}^{j=n-k(P+Q)} b_{n-j}\left[((k+1)(P+Q)+j-n)h_j^{(k)} + (n-j-k(P+Q))h_j^{(k+1)}\right]\end{array}\right)$$

$$r_n^{id} = \frac{1}{P+Q}\left(\begin{array}{l}\displaystyle\sum_{m=n-L+1}^{k(P+Q)-1} b_m\left[(k(P+Q)-m)h_{n-m}^{(k-1)} + (m-(k-1)(P+Q))h_{n-m}^{(k)}\right]\\[2mm]\displaystyle + \sum_{m=k(P+Q)}^{n} b_m\left[((k+1)(P+Q)-m)h_{n-m}^{(k)} + (m-k(P+Q))h_{n-m}^{(k+1)}\right]\end{array}\right)$$

$$n = k(P+Q) \dots k(P+Q)+L-2$$

$$(25)$$

- reste du bloc k (k = 1...K-1) :

$$r_n^{id} = \sum_{j=0}^{j=L-1} b_{n-j}\left[h_j^{(k)} + \frac{n-j-P_k}{P_{k+1}-P_k}\left(h_j^{(k+1)} - h_j^{(k)}\right)\right]$$

$$r_n^{id} = \frac{1}{P+Q} \sum_{j=0}^{j=L-1} b_{n-j}\left[((k+1)(P+Q)+j-n)h_j^{(k)} + (n-j-k(P+Q))h_j^{(k+1)}\right]$$

$$r_n^{id} = \frac{1}{P+Q} \sum_{m=n-L+1}^{n} b_m\left[((k+1)(P+Q)-m)h_{n-m}^{(k)} + (m-k(P+Q))h_{n-m}^{(k+1)}\right]$$

$$n = k(P+Q)+L-1 \dots (k+1)(P+Q)-1 \tag{26}$$

- traînage du bloc K-1 :

$$r_n^{id} = \sum_{j = n - N + 1}^{L - 1} b_{n-j} \left[ h_j^{(K-1)} + \frac{n - j - P_{K-1}}{P_K - P_{K-1}} \left( h_j^{(K)} - h_j^{(K-1)} \right) \right]$$

$$r_n^{id} = \frac{1}{P + Q} \sum_{j = n - N + 1}^{L - 1} b_{n-j} \left[ (N + j - n) h_j^{(K-1)} + (n - j - (N - (P + Q))) h_j^{(K)} \right]$$

$$r_n^{id} = \frac{1}{P + Q} \sum_{m = n - L + 1}^{N - 1} b_m \left[ (N - m) h_{n-m}^{(K-1)} + (m - (N - (P + Q))) h_{n-m}^{(K)} \right]$$

$$n = N ... N + L - 2 \qquad\qquad (27)$$

Le calcul des $b_i$ s'effectue par exemple en minimisant la quantité :

$$E_r = \sum_{n = 0}^{N + L - 2} \left| r_n^{id} - r_n^c \right|^2 \qquad (28)$$

sachant que $b_m$ (m = 0...N-1) n'intervient que dans le calcul de L échantillons "idéaux", ceux d'indices m, m+1, ..., m + L - 1.

De façon rigoureuse, on vérifie que (29) :

$$b_{k (P + Q) + i}$$
$$\text{avec :}$$
$$k = 0...K - 1$$
$$i = 0...P + Q - 1$$

apparaît dans

$$r_{k (P + Q) + i + j}^{id}$$
$$\text{avec}$$
$$j = 0...L - 1$$

avec un coefficient égal à

$$\beta_{k, i, j} = \frac{(P + Q - i) h_j^{(k)} + i\, h_j^{(k+1)}}{P + Q}$$
$$k = 0...K - 1$$
$$i = 0...P + Q - 1$$
$$j = 0...L - 1$$

Les N équations permettant de déterminer les $b_m$ résulteront de l'annulation des N dérivées suivantes (30) :

$$\frac{\partial E_r}{\partial b_m^*} = \sum_{n=0}^{N+L-2} \frac{\partial r_n^{id}}{\partial b_m^*} \left[ r_n^{id} - r_n^c \right]$$

$$= \sum_{n=m}^{m+L-1} \frac{\partial r_n^{id}}{\partial b_m^*} \left[ r_n^{id} - r_n^c \right]$$

$$m = 0 ... N - 1$$

ou encore :

$$\frac{\partial E_r}{\partial b_{k(P+Q)+i}^*} = \sum_{j=0}^{L-1} \beta_{k,i,j}^* \left[ r_{k(P+Q)+i+j}^{id} - r_{k(P+Q)+i+j}^c \right]$$

$$k = 0 ... K - 1$$
$$i = 0 ... P + Q - 1 \tag{31}$$

soit enfin :

$$\frac{\partial E_r}{\partial b_m^*} = \sum_{j=0}^{L-1} \beta_{k,i,j}^* \left[ r_{m+j}^{id} - r_{m+j}^c \right]$$

$$k = 0 ... K - 1$$
$$i = 0 ... P + Q - 1$$
$$m = k(P+Q) + i \tag{32}$$

Les N équations à résoudre seront donc de la forme :

$$\sum_{j=0}^{L-1} \beta_{k,i,j}^* r_{m+j}^{id} = \sum_{j=0}^{L-1} \beta_{k,i,j}^* r_{m+j}^c$$

$$k = 0 ... K - 1$$
$$i = 0 ... P + Q - 1$$
$$m = k(P+Q) + i \tag{33}$$

Le second membre se calcule de la manière suivante :

$$D_m = \sum_{j=0}^{L-1} \beta^{*}_{k,i,j} \, r^{c}_{m+j}$$

$$= \frac{1}{P+Q} \sum_{j=0}^{L-1} \left[ (P+Q-i) h^{(k)*}_{j} + i \, h^{(k+1)*}_{j} \right] r^{c}_{m+j}$$

$$k = 0 \ldots K - 1$$
$$i = 0 \ldots P + Q - 1$$
$$m = k(P+Q) + i \qquad\qquad (34)$$

Le calcul du premier membre est réalisé par exemple en reprenant les équations donnant les $r_{id}$ et en les clarifiant en utilisant les coefficients $\beta_{k,i,j}$ définis plus haut :

$$r^{id}_{n} = \sum_{m=0}^{n} b_m \, \beta_{0,m,n-m}$$
$$n = 0 \ldots L - 2 \qquad (35)$$

$$r^{id}_{n} = \sum_{m=n-L+1}^{n} b_m \, \beta_{0,m,n-m}$$
$$n = L - 1 \ldots P + Q - 1 \qquad (36)$$

pour $k = 1 \ldots K - 1$ :

$$r^{id}_{n} = \sum_{m=n-L+1}^{k(P+Q)-1} b_m \, \beta_{k-1,m-(k-1)(P+Q),n-m} + \sum_{m=k(P+Q)}^{n} b_m \, \beta_{k,m-k(P+Q),n-m}$$
$$n = k(P+Q) \ldots k(P+Q) + L - 2 \qquad\qquad (37)$$

pour $k = 1 \ldots K - 1$ :

$$r^{id}_{n} = \sum_{m=n-L+1}^{n} b_m \, \beta_{k,m-k(P+Q),n-m}$$
$$n = k(P+Q) + L - 1 \ldots (k+1)(P+Q) - 1 \qquad (38)$$

$$r^{id}_{n} = \sum_{m=n-L+1}^{N-1} b_m \, \beta_{K-1,m-(N-(P+Q)),n-m}$$
$$n = N \ldots N + L - 2 \qquad (39)$$

En considérant dans l'équation de rang m = k (P + Q) + i, pour k = 0...K - 1, et i = 0...P + Q - 1, le coefficient de $b_{m+p}$ (avec p = 0...L - 1, car la matrice correspondante est Hermitienne, et contient uniquement des zéros à une distance supérieure ou égale à L de sa diagonale) est donné par (40):

- pour i = 0...P + Q - L et p = 0...L - 1 :

$$\sum_{q=0}^{L-1-p} \beta^{*}_{k,i,q+p} \beta_{k,i+p,q}$$

- pour i = P + Q - L + 1....P + Q - 1 et k = 0... K - 2 :

- pour p = 0...P + Q - 1 -i:

$$\sum_{q=0}^{L-1-p} \beta^{*}_{k,i,q+p} \beta_{k,i+p,q}$$

- pour p = P + Q - i...L - 1 :

$$\sum_{q=0}^{L-1-p} \beta^{*}_{k,i,q+p} \beta_{k+1,i+p-P-Q,q}$$

- pour i = P + Q - L + 1....P + Q - 1 et k = K -1 :

- pour p = 0...P + Q - 1 - i :

$$\sum_{q=0}^{L-1-p} \beta^{*}_{k,i,q+p} \beta_{k,i+p,q}$$

- pour p = P + Q - i...L - 1 :
  0 (zéro, car les bi correspondants n'existent pas...)

L'expression suivante (41):

$$\sum_{q=0}^{L-1-p} \beta^{*}_{k,i,q+p} \beta_{k,i+p,q}$$

se développe successivement en :

$$\frac{1}{(P+Q)^2} \sum_{q=0}^{L-1-p} [(P + Q - i) h_{q+p}^{(k)*} + i\, h_{q+p}^{(k+1)*}] [(P + Q - i - p) h_{q}^{(k)} + (i + p) h_{q}^{(k+1)}]$$

$$\frac{1}{|P+Q|^2} \sum_{q=0}^{L-1-p} \left[|P+Q| h_{q+p}^{(k)*} + i \left(h_{q+p}^{(k+1)*} - h_{q+p}^{(k)*}\right)\right] \left[|P+Q-p| h_q^{(k)} + p \, h_q^{(k+1)} + i \left(h_q^{(k+1)} - h_q^{(k)}\right)\right]$$

$$\frac{1}{|P+Q|^2} \left( \begin{array}{c} \displaystyle\sum_{q=0}^{L-1-p} |P+Q| h_{q+p}^{(k)*} \left[|P+Q-p| h_q^{(k)} + p \, h_q^{(k+1)}\right] \\[2mm] + i \displaystyle\sum_{q=0}^{L-1-p} |P+Q| h_{q+p}^{(k)*} \left[h_q^{(k+1)} - h_q^{(k)}\right] + \left(h_{q+p}^{(k+1)*} - h_{q+p}^{(k)*}\right)\left[|P+Q-p| h_q^{(k)} + p \, h_q^{(k+1)}\right] \\[2mm] + i^2 \displaystyle\sum_{q=0}^{L-1-p} \left(h_{q+p}^{(k+1)*} - h_{q+p}^{(k)*}\right)\left(h_q^{(k+1)} - h_q^{(k)}\right) \end{array} \right)$$

$$\frac{1}{|P+Q|^2} \left( \begin{array}{c} \displaystyle |P+Q|^2 \sum_{q=0}^{L-1-p} h_{q+p}^{(k)*} h_q^{(k)} + p \, |P+Q| \sum_{q=0}^{L-1-p} h_{q+p}^{(k)*} \left(h_q^{(k+1)} - h_q^{(k)}\right) \\[2mm] + i \left( \begin{array}{c} \displaystyle |P+Q| \sum_{q=0}^{L-1-p} h_{q+p}^{(k)*} \left(h_q^{(k+1)} - h_q^{(k)}\right) + \left(h_{q+p}^{(k+1)*} - h_{q+p}^{(k)*}\right) h_q^{(k)} \\[2mm] + p \displaystyle\sum_{q=0}^{L-1-p} \left(h_{q+p}^{(k+1)*} - h_{q+p}^{(k)*}\right)\left(h_q^{(k+1)} - h_q^{(k)}\right) \end{array} \right) \\[2mm] + i^2 \displaystyle\sum_{q=0}^{L-1-p} \left(h_{q+p}^{(k+1)*} - h_{q+p}^{(k)*}\right)\left(h_q^{(k+1)} - h_q^{(k)}\right) \end{array} \right)$$

Sous une forme plus condensée :

$$B_{m,\,m+p}^{debut} = F_{k,\,p} + i \left(G_{k,\,p} + i \, H_{k,\,p}\right)$$

avec :

$$\delta h_r^{(k)} = h_r^{(k+1)} - h_r^{(k)}$$

$$F_{k,\,p} = \sum_{q=0}^{L-1-p} h_{q+p}^{(k)*} h_q^{(k)} + \frac{p}{P+Q} \sum_{q=0}^{L-1-p} h_{q+p}^{(k)*} \, \delta h_q^{(k)}$$

$$G_{k,p} = \frac{1}{P+Q} \sum_{q=0}^{L-1-p} h_{q+p}^{(k)*} \, \delta h_q^{(k)} + \delta h_{q+p}^{(k)*} \, h_q^{(k)} + \frac{p}{|P+Q|^2} \sum_{q=0}^{L-1-p} \delta h_{q+p}^{(k)*} \, \delta h_q^{(k)}$$

$$H_{k,p} = \frac{1}{|P+Q|^2} \sum_{q=0}^{L-1-p} \delta h_{q+p}^{(k)*} \, \delta h_q^{(k)}$$

Un raisonnement identique amène à écrire la somme utilisée à la fin d'un bloc

$$\sum_{q=0}^{L-1-p} \beta_{k,i,q+p}^{*} \, \beta_{k+1,i+p-P-Q,q}$$

sous la forme :

$$F_{k,p}^{fin} - (P+Q-i) \left[ G_{k,p}^{fin} - (P+Q-i) H_{k,p}^{fin} \right]$$

avec :

$$F_{k,p}^{fin} = \sum_{q=0}^{L-1-p} h_{q+p}^{(k+1)*} \, h_q^{(k+1)} + \frac{p}{P+Q} \sum_{q=0}^{L-1-p} h_{q+p}^{(k+1)*} \, \delta h_q^{(k+1)}$$

$$G_{k,p}^{fin} = \frac{1}{P+Q} \sum_{q=0}^{L-1-p} h_{q+p}^{(k+1)*} \, \delta h_q^{(k+1)} + \delta h_{q+p}^{(k)*} \, h_q^{(k+1)} + \frac{p}{|P+Q|^2} \sum_{q=0}^{L-1-p} \delta h_{q+p}^{(k)*} \, \delta h_q^{(k+1)}$$

$$H_{k,p}^{fin} = \frac{1}{|P+Q|^2} \sum_{q=0}^{L-1-p} \delta h_{q+p}^{(k)*} \, \delta h_q^{(k+1)}$$

En récapitulant cela donne

- pour k = 0...K - 2
- pour i = 0...P + Q - L

$$m = k\,(P + Q) + i$$

- pour p = 0...L - 1

coefficient de $b_{m+p}$ dans l'équation m donné par

$$B^{debut}_{m, m+p}$$

- pour i = P + Q - L + 1...P + Q - 1

$$m = k (P + Q) + i$$

- pour p = 0...P + Q - 1 - i
    coefficient de $b_{m+p}$ dans l'équation m donné par

$$B^{debut}_{m, m+p}$$

- pour p = P + Q - i...L - 1
    coefficient de $b_{m+p}$ dans l'équation m donné par

$$B^{fin}_{m, m+p}$$

- pour k = K - 1
- pour i = 0...P + Q - L

$$m = k (P + Q) + i$$

- pour p = 0...L - 1
    coefficient de $b_{m+p}$ dans l'équation m donné par

$$B^{debut}_{m, m+p}$$

- pour i = P + Q - L + 1...P + Q - 1

$$m = k (P + Q) + i$$

- pour p = 0...P + Q - 1 - i
    coefficient de $b_{m+p}$ dans l'équation m donné par

$$B^{debut}_{m, m+p}$$

Fin de récapitulation.

L'aspect général de la matrice B (en omettant les détails) est de la forme suivante (exemple pour L = 3, N = 15, K = 3 ou P+Q = 5) :

$$
B = \begin{vmatrix}
deb & deb & deb & & & & & & & & & \\
deb & deb & deb & deb & & & & & & & & \\
deb & deb & deb & deb & deb & & & & & & & \\
 & deb & deb & deb & deb & fin & & & & & & \\
 & & deb & deb & deb & fin & fin & & & & & \\
 & & & fin & fin & deb & deb & deb & & & & \\
 & & & & fin & deb & deb & deb & deb & & & \\
 & & & & deb & deb & deb & deb & deb & & & \\
 & & & & & deb & deb & deb & deb & fin & & \\
 & & & & & & deb & deb & deb & fin & fin & \\
 & & & & & & & fin & fin & deb & deb & deb \\
 & & & & & & & & fin & deb & deb & deb & deb \\
 & & & & & & & & & deb & deb & deb & deb & deb \\
 & & & & & & & & & & deb & deb & deb & deb \\
 & & & & & & & & & & & deb & deb & deb
\end{vmatrix}
$$

Le reste (décomposition L-U, résolution, décision, etc) est connu de l'homme de l'art.

Il faut noter que si les équations ci-dessus sont plus complexes à écrire que dans le cas où l'on se contente d'une interpolation linéaire simple pour toute la trame, elles représentent une puissance de calcul équivalente puisqu'il n'y a pas plus de termes à calculer et que la complexité des expressions qui les donnent (en nombre d'opérations élémentaires) est équivalente.

On peut toutefois mentionner que le critère de choix des interpolateurs qui donne le meilleur résultat est déduit de la dernière étape du BDFE, de la façon exposée ci-après.

Ce critère donne le rapport signal / bruit estimé pour la trame après l'exécution de l'algorithme BDFE qui, rappelons le, a pour but de déterminer les valeurs les plus probables pour les symboles émis compte tenu du signal reçu et de la réponse impulsionnelle du canal estimée par les moyens exposés précédemment.

Pour schématiser, la phase finale du BDFE procède en N étapes (N est le nombre de symboles inconnus émis pour la trame en cours de démodulation).

A l'étape n (n = 0... N - 1), on dispose des valeurs estimées $\hat{e}_0$, $\hat{e}_1$, $\hat{e}_2$, ..., $\hat{e}_{n-1}$ des symboles émis.

On soustrait alors du signal reçu $r_n$ l'influence des symboles émis précédents, compte tenu de la réponse impulsionnelle du canal, pour obtenir une valeur corrigée $r'_n$.

On détermine alors dans la "constellation" courante le point qui est le plus proche de $r'_n$ (opération de décision) qui devient la valeur (complexe) la plus probable du $n^{\text{ème}}$ symbole émis $\hat{e}_n$.

La différence entre $r'_n$ et $\hat{e}_n$ est due au bruit (d'une manière générale) et l'on peut prendre comme critère de choix le rapport signal/bruit estimé pour la trame comme étant le rapport entre la puissance moyenne du signal (les $e_n$) et la puissance moyenne du bruit (espérance mathématique du carré du module de la différence avant décision) :

$$
S/B_{est} = \frac{\langle |e_n|^2 \rangle}{\dfrac{1}{N}\sum_{n=0}^{N-1}|r'_n - \widetilde{e_n}|^2}
$$

Plus ce rapport S/B est élevé, plus on peut considérer que le jeu d'interpolateurs utilisé est adapté à la situation du moment.

Compte tenu du fait que, si l'on teste de façon rigoureuse 3 jeux d'interpolateurs pour faire un choix (le jeu courant et ses deux voisins), l'algorithme BDFE doit être itéré 3 fois par trame pour avoir un niveau de performances optimal.

Mais, en pratique, il n'est pas obligatoire (sinon au tout début de la réception si cela est absolument indispensable) de faire ces opérations aussi souvent.

Si (par exemple), le choix n'est fait que toutes les 2 trames, l'algorithme BDFE ne doit plus être itéré que (1 + 3) / 2 = 2 fois en moyenne par trame.

Autre exemple : s'il n'est fait que toutes les 8 trames, l'algorithme BDFE ne doit plus être itéré que (1 + 1 + ... + 1 + 3) / 8 = 1.25 fois en moyenne par trame, ce qui représente une faible augmentation de la puissance de calcul nécessaire.

La figure 7 schématise une structure d'un dispositif selon l'invention. Le ou les signaux préconditionnés après passage dans un ensemble de dispositifs habituellement utilisés et comportant des filtres adaptés, un CAG (contrôle automatique de gain, ...) et tous les dispositifs permettant le préconditionnement est transmis par exemple à un microprocesseur 1 pourvu d'un logiciel conçu pour exécuter les différentes étapes mentionnées ci-dessus. Les résultats obtenus sont ensuite transmis à un algorithme BDFE, 2, permettant d'obtenir les symboles émis les plus probables, selon une méthode connue de l'Homme du métier.

**Revendications**

1. Procédé d'égalisation de données d'un signal reçu par un récepteur après transmission dans un canal, le signal reçu comportant une ou plusieurs trames, une trame comportant au moins une probe et un bloc de données, **caractérisé en ce qu'**il comporte au moins les étapes suivantes :

   ■ estimer la réponse impulsionnelle à plusieurs instants, régulièrement espacés précédant un bloc de données ($h_{k0}$ ... $h_0$) et à plusieurs instants régulièrement espacés suivant le bloc de données ($h_1$ ... $h_{k1}$), ces instants où sont disposés des signaux connus appelés probes, sont au nombre de M,
   ■ ré-estimer par interpolation/filtrage, la réponse impulsionnelle du canal juste avant et juste après le dit bloc pour remplacer les estimations initiales ($h_0$ et $h_1$),
   ■ estimer par interpolation/filtrage K réponses impulsionnelles intermédiaire fictives régulièrement réparties dans le bloc de données,
   ■ modifier l'algorithme BDFE afin qu'il tienne compte de l'estimation "par segments" de la réponse impulsionnelle ainsi obtenue,
   ■ utiliser pour le lissage des filtres / interpolateurs adaptés à la vitesse de variation du canal, à un rapport signal sur bruit S/B fixé, ainsi qu'à la position dans la super-trame en cours de réception,
   ■ effectuer à intervalles réguliers le choix entre les jeux d'interpolateurs disponibles en se basant sur un critère de qualité qui est le rapport signal/bruit estimé en sortie de l'algorithme BDFE.

2. Procédé selon la revendication 1 **caractérisé en ce que** une probe fictive est disposée sensiblement au milieu du bloc de données.

3. Procédé selon l'une des revendications 1 et 2 **caractérisé en ce que** l'on dispose plusieurs probes fictives équiréparties dans le bloc de données ou réparties de façon à simplifier les calculs

4. Procédé selon l'une des revendications 1 à 3 **caractérisé en ce que** l'on utilise pour le calcul des probes fictives un total de M probes disponibles au voisinage du bloc de données considéré avec M pair de préférence

5. Procédé selon l'une des revendications 1 à 4 **caractérisé en ce que** l'on estime les réponses impulsionnelles associées aux probes fictives en utilisant la méthode des moindres carrés.

6. Procédé selon l'une des revendications 1 à 5 **caractérisé en ce que** l'on détermine les probes fictives à positionner dans le bloc de données en utilisant des interpolateurs et à partir d'une ou de plusieurs probes disponibles avant et/ou après le bloc de données.

7. Procédé selon la revendication 6 **caractérisé en ce que** les coefficients des interpolateurs sont choisis en minimisant l'erreur quadratique moyenne d'interpolation pour une rotation maximale donnée de la réponse impulsionnelle entre probes et pour une valeur de rapport S/B.

8. Procédé selon la revendication 7 **caractérisé en ce que** l'on détermine les coefficients des interpolateurs pour plusieurs valeurs de rotation de phase A.

9. Dispositif pour égaliser au moins un signal ayant traversé un canal de transmission, le signal reçu comportant une ou plusieurs trames, une trame comportant au moins un bloc de données encadré par deux probes et **caractérisé en ce qu'**il comporte au moins des moyens adaptés à exécuter les étapes du procédé selon la revendication 1 :

   ■ estimer la réponse impulsionnelle à plusieurs instants, régulièrement espacés précédant un bloc de données ($h_{k0}$ ... $h_0$) et à plusieurs instants régulièrement espacés suivant le bloc de données ($h_1$ ... $h_{k1}$), ces instants où sont disposés des signaux connus appelés probes, sont au nombre de M,

■ ré-estimer par interpolation/filtrage, la réponse impulsionnelle du canal juste avant et juste après le dit bloc pour remplacer les estimations initiales ($h_0$ et $h_1$),

■ estimer par interpolation/filtrage K réponses impulsionnelles intermédiaires fictives régulièrement réparties dans le bloc de données,

■ modifier l'algorithme BDFE afin qu'il tienne compte de l'estimation "par segments" de la réponse impulsionnelle ainsi obtenue,

■ utiliser pour le lissage des filtres / interpolateurs adaptés à la vitesse de variation du canal, à un rapport signal sur bruit S/B fixé, ainsi qu'à la position dans la super-trame en cours de réception,

■ effectuer à intervalles réguliers le choix entre les jeux d'interpolateurs disponibles en se basant sur un critère de qualité qui est le rapport signal/bruit estimé en sortie de l'algorithme BDFE.

**Claims**

1. Method of equalizing data of a signal received by a receiver after transmission in a channel, the received signal comprising one or more frames, a frame comprising at least one probe and one data block, **characterized in that** it comprises at least the following steps:

   ■ estimating the impulse response at a number of evenly spaced instants preceding a data block ($h_{k0} ... h_0$) and at a number of evenly spaced instants following the data block ($h_1 ... h_{k1}$), there being a number M of these instants containing known signals called probes,

   ■ reestimating, by interpolation/filtering, the impulse response of the channel just before and just after said block to replace the initial estimations ($h_0$ and $h_1$),

   ■ estimating, by interpolation/filtering, K hypothetical intermediate impulse responses evenly distributed in the data block,

   ■ modifying the BDFE algorithm for it to take account of the "by segments" estimation of the duly obtained impulse response,

   ■ using, for the smoothing, filters/interpolators suited to the speed of variation of the channel with a fixed signal-to-noise ratio SNR, and to the position in the superframe currently being received,

   ■ at regular intervals, making a choice between the available sets of interpolators based on a quality criterion that is the signal-to-noise ratio estimated at the output of the BDFE algorithm.

2. Method according to Claim 1, **characterized in that** a hypothetical probe is positioned roughly in the middle of the data block.

3. Method according to one of Claims 1 and 2, **characterized in that** there are a number of hypothetical probes evenly distributed in the data block or distributed in such a way as to simplify the calculations.

4. Method according to one of Claims 1 to 3, **characterized in that** a total of M probes available in the vicinity of the data block concerned are used to calculate the hypothetical probes, M preferably being even.

5. Method according to one of Claims 1 to 4, **characterized in that** the impulse responses associated with the hypothetical probes are estimated using the least squares method.

6. Method according to one of Claims 1 to 5, **characterized in that** the hypothetical probes to be positioned in the data block are determined using interpolators and based on one or more probes available before and/or after the data block.

7. Method according to Claim 6, **characterized in that** the coefficients of the interpolators are chosen by minimizing the mean-square interpolation error for a given maximum rotation of the impulse response between probes and for an SNR value.

8. Method according to Claim 7, **characterized in that** the coefficients of the interpolators are determined for a number of phase rotation values A.

9. Device for equalizing at least one signal having passed through a transmission channel, the received signal comprising one or more frames, a frame comprising at least one data block framed by two probes and **characterized in that** it comprises at least means suitable for executing the steps of the method according to Claim 1:

■ estimating the impulse response at a number of evenly spaced instants preceding a data block ($h_{k0}$ ... $h_0$) and at a number of evenly spaced instants following the data block ($h_1$ ... $h_{k1}$), there being a number M of these instants containing known signals called probes,

■ reestimating, by interpolation/filtering, the impulse response of the channel just before and just after said block to replace the initial estimations ($h_0$ and $h_1$),

■ estimating, by interpolation/filtering, K hypothetical intermediate impulse responses evenly distributed in the data block,

■ modifying the BDFE algorithm for it to take account of the "by segments" estimation of the duly obtained impulse response,

■ using, for the smoothing, filters/interpolators suited to the speed of variation of the channel with a fixed signal-to-noise ratio SNR, and to the position in the superframe currently being received,

■ at regular intervals, making a choice between the available sets of interpolators based on a quality criterion that is the signal-to-noise ratio estimated at the output of the BDFE algorithm.

**Patentansprüche**

1. Verfahren zum Entzerren von Daten eines von einem Empfänger nach Übertragung in einem Kanal empfangenen Signals, wobei das empfangene Signal einen oder mehrere Rahmen aufweist, wobei ein Rahmen mindestens eine Probe und einen Datenblock aufweist, **dadurch gekennzeichnet, dass** es mindestens die folgenden Schritte aufweist:

   • Schätzen der Impulsantwort in mehreren gleichmäßig beabstandeten Zeitpunkten vor einem Datenblock ($h_{k0}$ ... $h_0$) und in mehreren gleichmäßig beabstandeten Zeitpunkten nach dem Datenblock ($h_1$ ... $h_{k1}$), wobei diese Zeitpunkte, in denen bekannte, Proben genannte Signale angeordnet sind, in einer Anzahl M vorliegen,
   • erneutes Schätzen der Impulsantwort des Kanals durch Interpolation/Filterung direkt vor und direkt nach dem Block, um die Anfangsschätzungen ($h_0$ und $h_1$) zu ersetzen,
   • Schätzen von gleichmäßig im Datenblock verteilten K fiktiven Zwischenimpulsantworten durch Interpolation/Filterung,
   • Ändern des Algorithmus BDFE, damit er die "segmentielle" Schätzung der so erhaltenen Impulsantwort berücksichtigt,
   • Verwenden von Filtern/Interpolatoren für das Glätten, die an die Änderungsgeschwindigkeit des Kanals, an ein festgelegtes Signal/RauschVerhältnis S/B, sowie an die Position im gerade empfangenen Super-Rahmen angepasst sind,
   • Durchführen der Wahl zwischen den Sätzen von verfügbaren Interpolatoren in gleichmäßigen Abständen, indem man ein Qualitätskriterium als Basis nimmt, das das geschätzte Signal/RauschVerhältnis am Ausgang des Algorithmus BDFE ist.

2. Verfahren nach Anspruch 1, **dadurch gekennzeichnet, dass** eine fiktive Probe im Wesentlichen in der Mitte des Datenblocks angeordnet ist.

3. Verfahren nach einem der Ansprüche 1 und 2, **dadurch gekennzeichnet, dass** mehrere im Datenblock gleichverteilte oder zur Vereinfachung der Berechnungen verteilte fiktive Proben angeordnet werden.

4. Verfahren nach einem der Ansprüche 1 bis 3, **dadurch gekennzeichnet, dass** für die Berechnung der fiktiven Proben eine Gesamtheit von M Proben verwendet wird, die in der Umgebung des betrachteten Datenblocks verfügbar sind, wobei M vorzugsweise geradzahlig ist.

5. Verfahren nach einem der Ansprüche 1 bis 4, **dadurch gekennzeichnet, dass** die den fiktiven Proben zugeordneten Impulsantworten unter Verwendung der Methode der kleinsten Quadrate geschätzt werden.

6. Verfahren nach einem der Ansprüche 1 bis 5, **dadurch gekennzeichnet, dass** die im Datenblock zu positionierenden fiktiven Proben unter Verwendung von Interpolatoren und ausgehend von einer oder mehreren vor und/oder nach dem Datenblock verfügbaren Proben bestimmt werden.

7. Verfahren nach Anspruch 6, **dadurch gekennzeichnet, dass** die Koeffizienten der Interpolatoren ausgewählt werden, indem der mittlere quadratische Interpolationsfehler für eine gegebene maximale Drehung der Impulsantwort zwischen Proben und für einen Signal/Rausch-Verhältniswert minimiert wird.

8. Verfahren nach Anspruch 7, **dadurch gekennzeichnet, dass** die Koeffizienten der Interpolatoren für mehrere Drehwerte der Phase A bestimmt werden.

9. Vorrichtung zum Entzerren mindestens eines Signals, das einen Übertragungskanal durchquert hat, wobei das empfangene Signal einen oder mehrere Rahmen aufweist, wobei ein Rahmen mindestens einen Datenblock aufweist, der von zwei Proben umrahmt wird, und **dadurch gekennzeichnet, dass** sie mindestens Einrichtungen aufweist, die geeignet sind, um die Schritte des Verfahrens nach Anspruch 1 durchzuführen:

- Schätzen der Impulsantwort in mehreren gleichmäßig beabstandeten Zeitpunkten vor einem Datenblock ($h_{k0}$ ... $h_0$) und in mehreren gleichmäßig beabstandeten Zeitpunkten nach dem Datenblock ($h_1$ ... $h_{k1}$), wobei diese Zeitpunkte, in denen bekannte, Proben genannte Signale angeordnet sind, in einer Anzahl M vorliegen,
- erneutes Schätzen der Impulsantwort des Kanals durch Interpolation/Filterung direkt vor und direkt nach dem Block, um die Anfangsschätzungen ($h_0$ und $h_1$) zu ersetzen,
- Schätzen von K fiktiven Zwischenimpulsantworten durch Interpolation/Filterung, die gleichmäßig im Datenblock verteilt sind,
- Ändern des Algorithmus BDFE, damit er die "segmentielle" Schätzung der so erhaltenen Impulsantwort berücksichtigt,
- Verwenden von Filtern/Interpolatoren für das Glätten, die an die Änderungsgeschwindigkeit des Kanals, an ein festgelegtes Signal/RauschVerhältnis S/B, sowie an die Position im gerade empfangenen Super-Rahmen angepasst sind,
- Durchführen der Wahl zwischen den Sätzen von verfügbaren Interpolatoren in gleichmäßigen Abständen, indem man ein Qualitätskriterium als Basis nimmt, das das geschätzte Signal/RauschVerhältnis am Ausgang des Algorithmus BDFE ist.

Probe      Données libres      Probe      Données libres      Probe

n-1      n      n      n+1      n+1

# Fig. 1

probe avant
P(n-1)

données à démoduler
N

probe après
P(n)

L      L      L      L

signal reçu
pour la probe
avant

signal reçu
pour la probe
après

données utilisées pour la démodulation
N+L-1

$h_0(t)$      $h_1(t)$

# Fig. 2

Fig. 3

Fig. 4

Données
à traiter

n+k0 ... n n+1 ... n+k1

| Estimation de hk0 (t) | ... | Estimation de h0 (t) | Estimation de h1 (t) | ... | Estimation de hk1 (t) |

ax,0 ⊗  ax,1 ⊗  ax,2 ⊗  ax,3 ⊗  ... ⊗  ax,k1-k0 ⊗

Σ

hx (t) lissé

Fig. 5

QP SK : optimisation pour un S/B de 15dB
k=-3...4
Interpolateurs pour des rotations maximales de 20, 36, 66 et 120°

20°
36°
66°
120°

x = 1; bruit = -6,5 dB
x = 0,777; bruit = -6,5 dB
x = 0,554; bruit = -6,5 dB
x = 0,331; bruit = -6,5 dB
x = 0,108; bruit = -6,5 dB
x = 0; bruit = -6,5 dB
x = 1; bruit = -5,4 dB
x = 0,777; bruit = -5,4 dB
x = 0,554; bruit = -5,3 dB
x = 0,331; bruit = -5,3 dB
x = 0,108; bruit = -5,2 dB
x = 0; bruit = -5,2 dB
x = 1; bruit = -3,4 dB
x = 0,777; bruit = -3,4 dB
x = 0,554; bruit = -3,3 dB
x = 0,331; bruit = -3,3 dB
x = 0,108; bruit = -3,4 dB
x = 0; bruit = -3,4 dB
x = 1; bruit = -1,5 dB
x = 0,777; bruit = -1,4 dB
x = 0,554; bruit = -1,4 dB
x = 0,331; bruit = -1,4 dB
x = 0,108; bruit = -1,5 dB
x = 0; bruit = -1,5 dB

1
0,5
0
-0,5

## Fig. 6

Signaux prétraités (CAG, Filtre, synchro) → Bloc selon l'invention → BDFE 2 → Symboles émis les plus probables

1

## Fig. 7

**RÉFÉRENCES CITÉES DANS LA DESCRIPTION**

**Documents brevets cités dans la description**

- EP 0793359 A
- EP 0912019 A